# EUROPÄISCHE PATENTSCHRIFT

(11) **EP 3 056 972 B1**
(45) Veröffentlichungstag und Bekanntmachung des Hinweises auf die Patenterteilung: **01.08.2018**
(21) Anmeldenummer: 16153652.9
(22) Anmeldetag: 01.02.2016
(51) Int. Cl.: G06F 3/01, G06F 3/16, G06F 9/44, G06F 3/0488, B60K 35/00, G06F 3/03, G06F 3/0484, B60K 37/06, G06F 9/451

(54) **VERFAHREN ZUM BEDIENEN EINER NUTZERSCHNITTSTELLE IN EINEM FAHRZEUG**
METHOD FOR OPERATING A USER INTERFACE IN A VEHICLE
PROCEDE D'UTILISATION D'UNE INTERFACE UTILISATEUR DANS UN VEHICULE

(30) Priorität: 11.02.2015 DE 102015202459
(43) Veröffentlichungstag der Anmeldung: 17.08.2016
(73) Patentinhaber: Volkswagen Aktiengesellschaft, 38440 Wolfsburg (DE)
(72) Erfinder: Stäbler, Mathias, 10585 Berlin (DE); Sperrhake, Marcel, 99094 Erfurt (DE)

(56) Entgegenhaltungen:
- WO-A1-2013/188890
- WO-A2-2011/059202
- US-A1- 2011 273 380
- US-A1- 2012 069 055
- US-A1- 2013 155 237
- US-B2- 8 624 932
- STEPHEN BREWSTER ET AL: "Multimodal 'eyes-free' interaction techniques for wearable devices", CHI 2003. CONFERENCE PROCEEDINGS. CONFERENCE ON HUMAN FACTORS IN COMPUTING SYSTEMS. FORT LAUDERDALE, FL, APRIL 5 - 10, 2003., 5. April 2003 (2003-04-05), Seiten 473-480, XP055277722, US DOI: 10.1145/642611.642694 ISBN: 978-1-58113-630-2

## Beschreibung

Die vorliegende Erfindung betrifft ein Verfahren zum Bedienen einer Nutzerschnittstelle. Dabei ist über die Nutzerschnittstelle zumindest eine Funktion mittels einer Bediengeste bedienbar. Ferner betrifft die Erfindung eine Vorrichtung zum Bedienen einer Nutzerschnittstelle.

Graphische Nutzerschnittstellen sind insbesondere bei Computern und bei Bediensystemen von elektronischen Einrichtungen bekannt, bei denen sie dem Benutzer die Interaktion mit der Maschine über grafische Symbole, auch als Objekte bezeichnet, erlaubt. Diese Objekte können dabei auf vielfältige Weise gesteuert werden. Sie können beispielsweise mittels einer elektronischen Maus, über eine berührungsempfindliche Anzeigefläche oder über Gesten, die vor oder auf der Anzeigefläche erfasst und in Steuersignale umgewandelt werden, ausgewählt oder verschoben werden. Ferner kann über ein ausgewähltes Objekt auch eine dem Objekt zugeordnete Funktion zum Steuern eines Geräts ausgeführt werden.

Aufgrund der Zunahme elektronischer Einrichtungen in Fahrzeugen ist man inzwischen dazu übergegangen, auch Fahrzeuge mit einem Bediensystem auszustatten, das über eine graphische Nutzerschnittstelle verfügt, um die diversen Einrichtungen des Fahrzeugs, beispielsweise Radio, CD-Spieler, Kommunikationseinrichtung oder Navigationssystem, mittels weniger Bedienelemente steuern zu können. Um dabei einen Fahrer des Fahrzeugs so wenig wie möglich von der Aufgabe des Fahrzeugführens abzulenken, werden solche Bediensysteme häufig über Gestensteuerung bedient, wobei die Gesten vor oder auf einer Anzeigefläche ausgeführt und erfasst werden.

Die Anwendung einer Gestensteuerung setzt dabei im Allgemeinen eine vorherige Kenntnis der Gesten voraus, die vom System erkannt werden, und die eine gewünschte Systemantwort hervorrufen. Kennt der Nutzer die Gesten nicht, kann er über ein Hilfemenü diese Gesten abrufen. Dies ist jedoch insbesondere in Fahrzeugen nur dann möglich, wenn das Fahrzeug steht.

Aus der US 2013/0155237 ist ein Verfahren zum Interagieren mit einem mobilen Gerät in einem Fahrzeug bekannt. Dabei wird dem Nutzer vor Ausführung einer Geste beispielsweise eine Bewegungsrichtung dargestellt, in welche eine Geste ausgeführt

WO 2011/059202 A2 offenbart ein Verfahren zum Bedienen einer Nutzerschnittstelle gemäß dem Oberbegriff des anhängenden Anspruchs 1. Dabei wird für den Benutzer bei Nichterkennung einer erfassten Geste vor einer Anzeigefläche eine Systemrückmeldung generiert, wobei die Systemrückmeldung einen Hinweis auf eine korrekte Ausführung der Bediengeste umfasst.

In US 2012/0069055 A1 wird eine Vorrichtung zum Erkennen räumlicher Gesten in einem Erfassungsraum beschrieben in der akustische oder optische Warnhinweise generiert werden wenn die Hand des Benutzers während der Ausführung einer Geste den Erfassungsraum verlässt. Zudem ist aus der DE 10 2012 000 201 A1 ein Verfahren und eine Vorrichtung zum Bedienen von auf einer Anzeigeeinheit eines Fahrzeugs angezeigten Funktionen durch Gestensteuerung bekannt.

Der vorliegenden Erfindung liegt die Aufgabe zugrunde, ein Verfahren und eine Vorrichtung bereitzustellen, durch die eine Gestensteuerung zuverlässig und schnell ausgeführt werden kann.

Erfindungsgemäß wird diese Aufgabe durch ein Verfahren mit den Merkmalen des Anspruchs 1 sowie eine Vorrichtung mit den Merkmalen des Anspruchs 9 gelöst. Vorteilhafte Ausgestaltungen und Weiterbildungen ergeben sich aus den abhängigen Ansprüchen.

Die Erfindung wird nun anhand von Ausführungsbeispielen mit Bezug zu den Zeichnungen im Detail erläutert.
- Figur 1: zeigt ein Beispiel einer nicht erfindungsgemäßen Vorrichtung,
- Figur 2: zeigt ein Beispiel einer Anordnung der Vorrichtung in einem Fahrzeug,
- Figuren 3a und 3b zeigen: ein Beispiel eines nicht erfindungsgemäßen Verfahrens,
- Figur 4: zeigt ein Flussdiagramm für das Verfahren,
- Figur 5: zeigt ein Beispiel für die Festlegung des Konfidenzmaßes,
- Figur 6: zeigt ein Ausführungsbeispiel der erfindungsgemäßen Vorrichtung sowie ein erstes Ausführungsbeispiel des erfindungsgemäßen Verfahrens,
- Figur 7: zeigt ein Flussdiagramm für das erste Ausführungsbeispiel des erfindungsgemäßen Verfahrens und
- Figur 8: zeigt ein zweites Ausführungsbeispiel des erfindungsgemäßen Verfahrens.

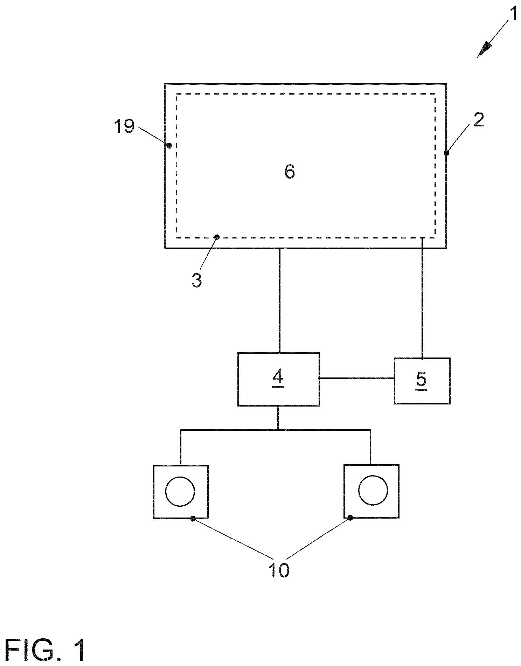

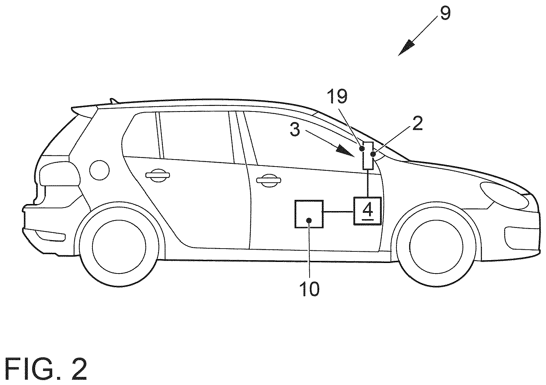

Mit Bezug zu den Figuren 1 und 2 wird ein Beispiel einer nicht erfindungsgemäßen Vorrichtung 1 sowie eine Anordnung der Vorrichtung 1 in einem Fahrzeug 9 erläutert.

Die Vorrichtung 1 umfasst eine Nutzerschnittstelle 2, welche als eine in dem Fahrzeug 9 angeordnete Anzeigevorrichtung ausgestaltet ist. Über die Anzeigevorrichtung 2 kann der Nutzer auf alle Funktionen des Fahrzeugs 2 zugreifen und diese durch Bediengesten steuern. Dabei sind bestimmte Funktionen durch festgelegte Bediengesten steuerbar. Die Bediengesten sind dabei jeder Funktion separat zugeordnet. Dies wiederum bedeutet, dass nicht jede Funktion durch eine beliebige Geste bedient werden kann, sondern lediglich durch die Bediengeste/n, die ihr zugeordnet ist/sind.

Die Anzeigevorrichtung 2 umfasst eine Anzeigefläche 19. Auf der Anzeigefläche 19 ist eine Erfassungseinheit 3 angeordnet. Die Erfassungseinheit 3 ist als auf der Anzeigefläche 19 angeordnete berührungsempfindliche Oberfläche ausgestaltet. Die Anzeigefläche 19 stellt demnach einen sogenannten Touch-Screen dar. Zudem bildet die berührungsempfindliche Oberfläche 3 den Erfassungsraum 6 der Anzeigevorrichtung 2. Dabei ist in dem Erfassungsraum 6 eine von einem Nutzer ausgeführte Geste erfassbar.

Weiterhin umfasst die Vorrichtung 1 eine Steuereinheit 4. Die Steuereinheit 4 ist dabei mit der Anzeigefläche 19, der berührungsempfindlichen Oberfläche 3 und einer Ermittlungseinheit 5 verbunden. Die berührungsempfindliche Oberfläche 3 übermittelt Signale, welche durch die Gestenerfassung erzeugbar sind, an die Ermittlungseinheit 5. Die Ermittlungseinheit 5 ermittelt dann ein Konfidenzmaß und vergleicht dieses mit einem festgelegten Wert. Das ermittelte Konfidenzmaß gibt dabei die Sicherheit an, mit welcher die ausgeführte Geste der Bediengeste entspricht. Unterschreitet das ermittelte Konfidenzmaß den festgelegten Wert, gibt die Ermittlungseinheit 5 ein Signal an die Steuereinheit 4, die wiederum die Anzeigevorrichtung 2 derart ansteuert, dass auf deren Anzeigefläche 19 ein visueller Hinweis zur korrekten Ausführung der Bediengeste angezeigt wird. Die Anzeigefläche 19 dient also als Rückmeldeeinheit.

Zudem ist die Steuereinheit 4 mit einer Lautsprecheranlage 10 des Fahrzeugs 9 verbunden. Über die Lautsprecheranlage 10 wird zusätzlich oder alternativ ein akustischer Hinweis zur korrekten Ausführung der Bediengeste gegeben. Auch die Lautsprecheranlage dient als Rückmeldeeinheit.

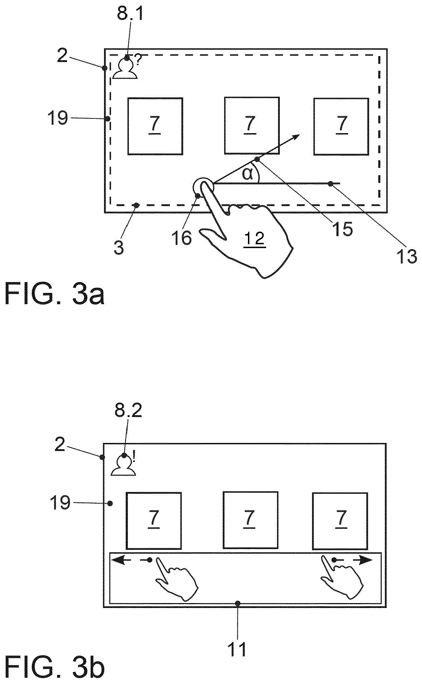

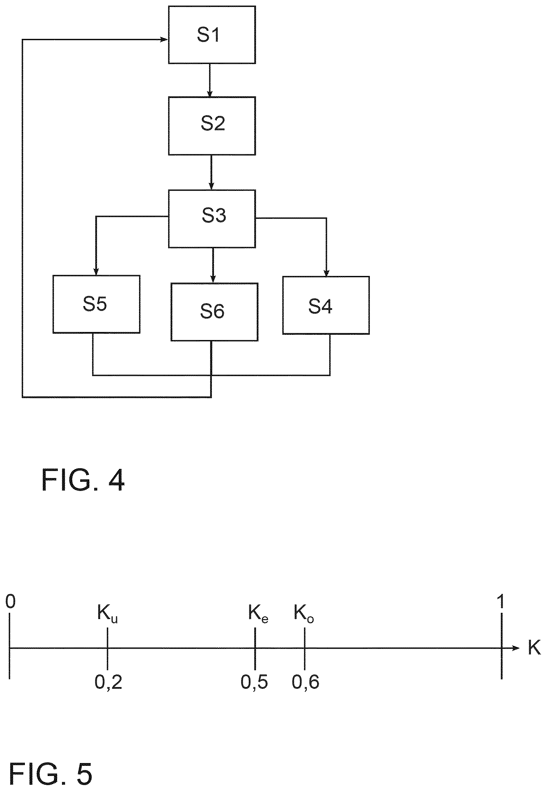

Mit Bezug zu den Figuren 3a, 3b, 4 und 5 wird ein Beispiel eines Verfahrens, welches mit dem Beispiel der erfindungsgemäßen Vorrichtung ausgeführt wird, erläutert.

Ausgangspunkt ist dabei, dass der Nutzer eine Musikfunktion des Fahrzeugs 9 bedient. Dabei werden dem Nutzer Musikalben über graphische Objekte 7 angezeigt, welche er auswählen kann. Zudem kann er durch eine Liste an graphischen Objekten 7, also Musikalben, scrollen. Dazu ist der Musikfunktion eine Bediengeste zugeordnet. Die Bediengeste ist dabei eine horizontale Wischgeste. Dieser Wischgeste ist dabei eine festgelegte Trajektorie 13 zugeordnet. Wird eine solche Geste erfasst, wird ein Scroll-Bildlauf auf der Anzeigefläche 19 erzeugt. Durch die Bediengeste wird ein Bildlauf auf der Anzeigefläche 19 erzeugt, bei dem momentan angezeigte graphische Objekte 7 aus der Anzeigefläche 19 zu einer Seite hinausgeschoben werden, während auf der anderen Seite der Anzeigefläche 19 neue graphische Objekte 7 in die Anzeigefläche 19 hineingeschoben werden. Die Richtung, in welche sich der Bildlauf bewegt, ist dabei abhängig von der Richtung der ausgeführten Geste.

Im Schritt S1 des Verfahrens wird eine Geste erfasst, die der Nutzer auf der berührungsempfindlichen Oberfläche 3 mit einem Bedienelement 12, welches die Hand des Nutzers ist, ausführt. Die Geste beginnt der Nutzer dabei bei dem Berührungspunkt 16. Dabei wird die Trajektorie 15, die der Nutzer mit seiner Hand 12 auf der berührungsempfindlichen Oberfläche 3 beschreibt, erfasst. Die erfasste Trajektorie 15 beschreibt dabei eine gerade Linie, die vom Berührungspunkt 16 ausgeht und nach rechts oben geführt ist, wie in Figur 3a gezeigt ist.

In Schritt S2 wird die erfasste Trajektorie 15 mit der der Bediengeste zugeordneten Trajektorie 13 verglichen. Dies geschieht dadurch, dass der Winkel a, den die erfasste Trajektorie 15 mit der festgelegten Trajektorie 13 einschließt, ermittelt wird. Im vorliegenden Beispiel liegt der Winkel bei 30°. Der Winkel α beschreibt zudem eine Abweichung der erfassten Trajektorie 15 von der festgelegten Trajektorie 13.

Aus dem ermittelten Winkel α wird in Schritt S3 ein Konfidenzmaß Kₑ ermittelt. Das ermittelte Konfidenzmaß Kₑ wird dann mit einem festgelegten Konfidenzwert Kₒ verglichen.

Liegt das ermittelte Konfidenzmaß Kₑ oberhalb des festgelegten Konfidenzwertes Kₒ wird bei dem Verfahren mit dem Schritt S4 fortgefahren. Der festgelegte Konfidenzwert Kₒ beträgt dabei 0,6. Beträgt der Wert des ermittelten Konfidenzmaßes 0,6 oder höher, wird die Geste als Bediengeste gewertet.

Im Schritt S4 wird der erwünschte Bildlauf erzeugt, da die erfasste Geste als Bediengeste erkannt wird.

Liegt das ermittelte Konfidenzmaß Kₑ hingegen unterhalb des festgelegten Konfidenzwertes Kₒ wird das Verfahren im Schritt S5 fortgefahren. Im vorliegenden Beispiel liegt das Konfidenzmaß bei 0,5. Das Verfahren fährt im vorliegenden Beispiel daher mit Schritt S5 fort.

Es wird zunächst in Schritt S6 ein graphisches Element 8.1 auf der Anzeigefläche 19 erzeugt. Dieses umfasst ein Fragezeichen und zeigt dem Nutzer somit an, dass die ausgeführte Geste nicht erkannt wurde.

Führt der Nutzer die Geste nun ein zweites Mal auf die gleiche Art und Weise aus, wird diese in Schritt S7 erfasst und wiederum das Konfidenzmaß Kₑ ermittelt.

Im Schritt S8 wird dann ein graphisches Element 8.2 angezeigt. Dieses umfasst ein Ausrufezeichen und zeigt dem Nutzer dadurch an, dass es sich um eine Anzeige zur Hilfe handelt. Es wird gleichzeitig eine Systemrückmeldung generiert. Die Systemrückmeldung ist dabei ein visueller Hinweis 11 zur korrekten Ausführung der Bediengeste. Dazu wird ein graphisches Objekt 17, welches die graphische Repräsentation einer Hand darstellt, auf beiden Seiten der Anzeigefläche 19 angezeigt. Um die Bewegung anzuzeigen, welche der Nutzer ausführen muss, um einen Bildlauf zu erzeugen, werden zudem zwei horizontale Pfeile 18 jeweils neben den graphischen Objekten 17 angezeigt. Dadurch wird dem Nutzer angezeigt, dass er eine horizontale Wischgeste ausführen muss, um den gewünschten Bildlauf zu erzeugen. Zudem wird durch die Zeigerichtung der Pfeile 18 angezeigt, in welche Richtung die Geste ausgeführt werden muss, um einen Bildlauf in eine gewünschte Richtung zu erzeugen. Dies ist in Figur 3b gezeigt.

Alternativ können die graphischen Objekte 17 auch auf der Anzeigefläche 19 horizontal hin und her bewegt werden. Es wird also eine Bildreihenfolge erzeugt, mittels welcher dem Nutzer in einer bewegten Animation die Bediengeste dargestellt wird. Zusätzlich können dazu die graphischen Objekte bewegt werden. Dadurch kann der Nutzer dann auf intuitive Weise erfassen, welche Veränderung auf der Anzeigefläche 19 die Bediengeste nach sich zieht.

Liegt das ermittelte Konfidenzmaß Kₑ unterhalb eines weiteren festgelegten Konfidenzwertes Kᵤ, wird das Verfahren mit Schritt S6 fortgeführt. Der weitere festgelegte Wert liegt dabei bei 0,2.

Im Schritt S6 wird die Geste nicht als Geste gewertet. Es wird keine Reaktion seitens des Systems erzeugt. Dies ist beispielsweise der Fall, wenn die berührungsempfindliche Oberfläche 3 nicht beabsichtigt berührt wurde. Dies kann beispielsweise darüber erkannt werden, dass die Berührungszeit sehr kurz ist, beispielsweise unter 1 Sekunde beträgt.

Nach den Schritten S4, S5 oder S6 beginnt das Verfahren von vorne.

Alternativ oder zusätzlich zu dem visuellen Hinweis 11 kann auch ein akustischer Hinweis über die Lautsprecheranlage 10 ausgegeben werden. Dabei kann der akustische Hinweis auch ausgegeben werden, wenn die Geste als Bediengeste erkannt wurde. Es wird dann für jeden Verfahrensschritt S4 bis S6 ein Ton mit bestimmter Tonfrequenz erzeugt. Der Nutzer kann dann über die Tonfrequenz sofort erfassen, ob die von ihm ausgeführte Geste sowohl erfasst und als auch als Bediengeste erkannt wurde, nur erfasst, aber nicht erkannt wurde, oder als nicht erfasst gewertet wird. Dabei kann für das für Schritt S4 gültige erste Konfidenzwertintervall von ausschließlich 0,6 bis 1, das für Schritt S5 gültige zweite Konfidenzwertintervall von 0,2 bis 0,6 und für das für Schritt S6 gültige dritte Konfidenzwertintervall von 0 bis ausschließlich 0,2 jeweils ein Ton einer bestimmten Tonfrequenz ausgegeben werden. Alternativ oder zusätzlich zur Tonfrequenz kann auch eine Tonlautstärke für jedes Konfidenzwertintervall verändert werden. Der Ton ist für das erste Konfidenzintervall am lautesten und nimmt kontinuierlich ab. Zudem kann auch noch bei wiederholt hintereinander ausgegebenen Tönen das Intervall zwischen aufeinanderfolgenden Tönen von dem Konfidenzwertintervall abhängen. Für das erste Konfidenzintervall wird dann ein Dauerton ausgegeben, während für das zweite Konfidenzintervall eine Dauer von einer Sekunde zwischen den ausgegebenen Tönen liegt und für das dritte Konfidenzintervall eine Dauer von zwei Sekunden zwischen den ausgegebenen Tönen liegt.

Der Nutzer wird dadurch auf akustische Art und Weise zur korrekten Ausführung der Bediengeste geleitet.

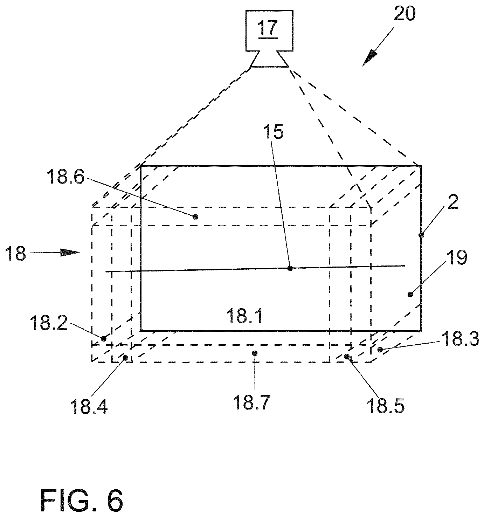

Mit Bezug zu Figur 6 wird ein Ausführungsbeispiel der erfindungsgemäßen Vorrichtung 20 erläutert.

Dabei umfasst dieses Ausführungsbeispiel der Vorrichtung 20 eine Kamera 17 als Erfassungseinheit anstatt der berührungsempfindlichen Oberfläche 3. Der Erfassungsraum 18 wird dann von einem Volumen vor der Anzeigefläche 19 der Anzeigevorrichtung 2 dargestellt. Der Erfassungsraum 18 ist zudem in mehrere Sektoren 18.1 bis 18.7 unterteilt. Die Anzahl der Sektoren 18.1 bis 18.7 beträgt also sieben. Der Sektor 18.1 stellt dabei einen Optimalbereich zur Gestenerfassung dar. Dies bedeutet, dass die Bedingungen zur Gestenerfassung und - erkennung im Sektor 18.1 optimal sind. Darunter sind wiederum optimale Lichtbedingungen und optimale Detektoreigenschaften für den Sektor 18.1 zu verstehen. Eine im Sektor 18.1 ausgeführte Geste kann bei korrekter Ausführung zweifelsfrei erkannt werden.

Die Sektoren 18.2 bis 18.5 sind senkrecht zur Anzeigefläche 19 ausgerichtet und erstrecken sich in horizontaler Richtung entlang der Anzeigefläche 19. Dabei sind die Sektoren 18.2 und 18.4 linke Randbereiche des Erfassungsraums 18, wobei der Sektor 18.2 am äußersten linken Rand des Erfassungsraums 18 liegt. Die Sektoren 18.3 und 18.5 sind rechte Randbereiche des Erfassungsraums 18, wobei der Sektor 18.3 am äußersten rechten Rand des Erfassungsraums 18 liegt. Die Sektoren 18.6 und 18.7 sind senkrecht zur Anzeigefläche 19 ausgerichtet und erstecken sich in vertikaler Richtung entlang der Anzeigefläche 19. Der Sektor 18.6 ist dabei am oberen Rand des Erfassungsraumes 18 angeordnet und der Sektor 18.7 ist am unteren Rand des Erfassungsraumes 18 angeordnet. In diesen Sektoren 18.2 bis 18.7 sind die Bedingungen zur Gestenerfassung und-erkennung nicht optimal. Dabei können sich die Lichtverhältnisse ausgehend vom Sektor 18.1 nach außen hin verschlechtern. Zudem sind die Eigenschaften des Detektors der Kamera 17 in den Randbereichen nicht mehr optimal, so dass sich für die Sektoren 18.2 bis 18.7 keine Optimalbedingungen zur Gestenerfassung und -erkennung ergeben. Eine in einem der Sektoren 18.2 bis 18.7 ausgeführte Geste wird zwar erfasst, kann jedoch nicht zweifelsfrei erkannt werden.

Gesten werden bei dem zweiten Ausführungsbeispiel der Vorrichtung 20 in dem Erfassungsraum 18 vor der Anzeigefläche 19, also berührungslos im Raum, ausgeführt.

Der sonstige Aufbau des Ausführungsbeispiels der erfindungsgemäßen Vorrichtung 20 entspricht der zuvor beschriebenen Vorrichtung 1.

Alternativ kann die Erfassungseinheit 17 des Ausführungsbeispiels der erfindungsgemäßen Vorrichtung 1 auch eine Annäherungserfassungseinheit sein. Die Geste wird dann beispielsweise über Infrarotsensoren erkannt. Weiterhin kann die Geste über andere Messverfahren erfasst werden.

Die Ausgestaltung des Erfassungsraums 18 kann dabei zudem an die Position, an welcher die Erfassungseinheit 17 eingebaut ist, angepasst werden. Die Form des Erfassungsraumes 18 muss also kein rechteckiges Volumen vor der Anzeigefläche 19 sein, sondern kann eine beliebige Form aufweisen. Zudem kann der Erfassungsraum 18 auch nicht-optimale Sektoren aufweisen, die parallel zur Anzeigefläche 19 angeordnet sind und sich von der Anzeigefläche 19 weg erstrecken. Ein Sektor kann dann direkt vor der Anzeigefläche 19, also in minimaler Entfernung zur Anzeigefläche 19 angeordnet sein, und ein weiterer Sektor kann in dem Erfassungsraum 18 maximal beabstandet zur Anzeigefläche 19 angeordnet sein. Dies bedeutet, dass, wenn die Hand 12 des Nutzers zu weit von der Anzeigefläche 19 entfernt erfasst wird oder zu nah an der Anzeigefläche 19 erfasst wird, die Geste nicht mehr optimal erfasst werden kann.

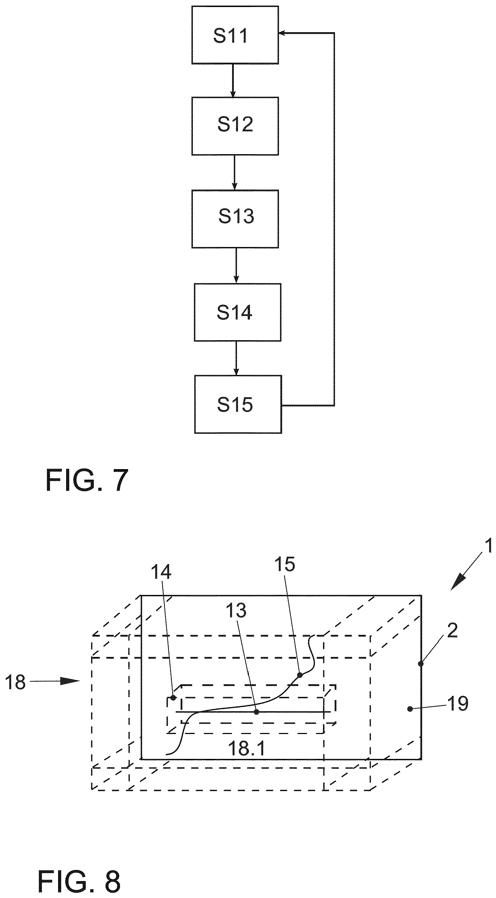

Zudem wird mit Bezug zu den Figuren 6 und 7 ein zweites Ausführungsbeispiel des erfindungsgemäßen Verfahrens erläutert. Dabei wird das zweite Ausführungsbeispiel des erfindungsgemäßen Verfahrens von dem zweiten Ausführungsbeispiel der erfindungsgemäßen Vorrichtung 20 ausgeführt.

In Schritt S11 wird zunächst die Hand 12 des Nutzers in dem Erfassungsraum 18 erfasst.

In Schritt S12 wird zudem die Trajektorie 15 erfasst, die der Nutzer mit seiner Hand 12 in dem Erfassungsraum 18 ausführt.

Dabei wird in Schritt S13 zunächst ermittelt, welche Sektoren 18.1 bis 18.7 die Hand 12 des Nutzers beim Ausführen der Geste durchquert. Im vorliegenden Beispiel durchquert der Nutzer bei der Ausführung der Geste alle sieben Sektoren 18.1 bis 18.7 des Erfassungsraums 18. Die erfasste Trajektorie 15 beginnt im Sektor 18.2 und endet im Sektor 18.3. Es werden dabei alle sechs Sektoren 18.2 bis 18.7, die nicht den Optimalbereich des Erfassungsraums 18 bilden, und der Sektor 18.1, welcher den Optimalbereich bildet, durchquert. Die ermittelte Anzahl sechs wird mit einer vorab festgelegten Anzahl zwei verglichen. Um eine Geste zweifelsfrei erkennen zu können, dürfen also lediglich zwei der durchquerten Sektoren 18.1 bis 18.7 nicht den Optimalbereich bilden.

In Schritt S14 wird aus der ermittelten Anzahl sechs das Konfidenzmaß Kₑ berechnet. Im vorliegenden Beispiel wird das Konfidenzmaß Kₑ zu 0,4 berechnet. Der berechnete Wert Kₑ liegt also unterhalb des festgelegten Konfidenzwertes Kₒ.

In Schritt S15 wird daher auf der Anzeigefläche 19 ein graphisches Element angezeigt, welches dem Nutzer anzeigt, dass er die Geste zu einem großen Teil außerhalb des Optimalbereichs ausgeführt hat. Der Nutzer erhält daher durch das graphische Element einen Hinweis darauf, wie er die Geste korrekt ausführen kann. Alternativ oder zusätzlich zur visuellen Ausgabe kann auch wieder eine akustische Ausgabe erfolgen, wie sie bereits mit Bezug zum ersten Ausführungsbeispiel des erfindungsgemäßen Verfahrens erläutert wurde.

Mit Bezug zu Figur 8 wird ein zweites Ausführungsbeispiel des erfindungsgemäßen Verfahrens erläutert. Auch dieses wird mit der Vorrichtung 20 ausgeführt.

Dabei wird die Geste im Sektor 18.1, also im Optimalbereich des Erfassungsraums 18, erfasst. Zudem wird wiederum die Trajektorie15 erfasst, die der Nutzer mit seiner Hand 12 in dem Erfassungsraum 18 beschreibt.

Die erfasste Trajektorie 15 wird mit einer festgelegten Trajektorie 13 verglichen. Dazu ist um die festgelegte Trajektorie 13 ein Toleranzbereich 14 gebildet. Es wird dann ein Prozentsatz ermittelt, zu welchem die Geste innerhalb des Toleranzbereiches 14 ausgeführt wurde. Im vorliegenden Beispiel wird ein Prozentsatz von 44% ermittelt. 56% der Geste werden also außerhalb des Toleranzbereiches 14 ausgeführt.

Aus dem ermittelten Prozentsatz wird dann wiederum ein Konfidenzmaß Kₑ ermittelt, mit welchem die erfasste Geste der Bediengeste entspricht. Dabei liegt das ermittelte Konfidenzmaß Kₑ unterhalb des festgelegten Konfidenzwertes Kₒ und oberhalb des weiteren festgelegten Konfidenzwertes Kᵤ. Es wurde demnach erkannt, dass eine Geste ausgeführt wurde, die ausgeführte Geste wurde allerdings nicht als die Bediengeste, mittels welcher die Musikfunktion bedient werden kann, erkannt. Es wird dann ein visueller Hinweis auf der Anzeigefläche 19 erzeugt, der dem Nutzer die korrekte Ausführung der Bediengeste in einer Animation anzeigt. Der visuelle Hinweis kann dabei wieder dem visuellen Hinweis 11 aus der Figur 3b entsprechen.

Alternativ kann die ausgeführte Geste bereits dann nicht als Bediengeste erkannt werden, wenn der Anfangspunkt und/oder der Endpunkt der ausgeführten Geste außerhalb des Toleranzbereichs 14 liegt.

Zudem kann alternativ oder zusätzlich zu dem visuellen Hinweis 11 über einen akustischen Hinweis der Nutzer in den Toleranzbereich 14 oder in den Sektor 18.1 geleitet werden. Dazu verändert sich der ausgegebene Ton mit der Position der Hand 12 des Nutzers in dem Erfassungsraum 18.

In einem dritten Ausführungsbeispiel wird erfasst, dass die gesamte Geste außerhalb des Sektors 18.1, also außerhalb des Optimalbereichs, ausgeführt wird. Es wird dann der Abstand der Hand 12 des Nutzers zu dem Sektor 18.1 ermittelt. In Abhängigkeit von dem ermittelten Abstand wird eine akustische Ausgabe erzeugt. Der ausgegebene Ton ist dann umso höher, je größer der ermittelte Abstand ist. Alternativ kann anstatt der Tonfrequenz, welche sich in der Höhe des Tons äußert, auch die Lautstärke des ausgegebenen Tons moduliert werden oder es können Töne wiederholt werden, wobei das Intervall zwischen zwei wiederholten Tönen moduliert wird. Dabei kann der Ton umso lauter werden, oder die Dauer zwischen zwei wiederholten Tönen umso kürzer, je größer der Abstand der Hand 12 des Nutzers vom Optimalbereich ist.

In einem vierten Ausführungsbeispiel des erfindungsgemäßen Verfahrens wird die Geschwindigkeit ermittelt, mit welcher das Bedienelement 12 durch den Erfassungsraum 18 geführt wird. Es wird also die Geschwindigkeit der ausgeführten Geste ermittelt. In der Ermittlungseinheit 5 ist ein Geschwindigkeitsintervall für die Bediengeste abgespeichert. Das Geschwindigkeitsintervall umfasst dabei Geschwindigkeiten in einem Bereich von 4 cm/s bis 10 cm/s. Ist die ermittelte Geschwindigkeit kleiner als 4 cm/s oder größer als 10 cm/s ist das Konfidenzmaß ermittelte Kₑ kleiner als 0,6. Die ausgeführte Geste wird nicht als Bediengeste erkannt. Für eine andere Bediengeste, beispielsweise eine vertikale Wischgeste, kann das Geschwindigkeitsintervall anders definiert sein. Dabei legt die ausgeführte Geste bzw. die Erkennung der ausgeführten Geste fest, auf welches Geschwindigkeitsintervall zurückgegriffen wird.

Es wird dann ein visueller Hinweis auf der Anzeigefläche 19 erzeugt, welcher dem Nutzer anzeigt, dass die Geste zu langsam bzw. zu schnell ausgeführt worden ist.

In einem weiteren Beispiel eines nicht erfindungsgemäßen Verfahrens sind der Fahrzeugfunktion drei Bediengesten zugeordnet. Die erste Bediengeste ist dabei wie in den vorherigen Ausführungsbeispielen die horizontale Wischgeste. Eine zweite Bediengeste ist eine vertikale Wischgeste zum Erzeugen eines vertikalen Bildlaufes auf der Anzeigefläche 19. Eine dritte Geste ist eine Zeigegeste zum Auswählen eines graphischen Objekts 7.

Es wird wieder eine Geste im Erfassungsraum 18 erfasst. Der Nutzer führt dabei eine schräg nach oben gerichtete Wischbewegung aus. Es wird dann für jede der drei Bediengesten ein Konfidenzmaß Kₑ ermittelt.

Dabei wird für die erste Bediengeste ein Konfidenzmaß Kₑ von 0,5 ermittelt. Für die zweite Bediengeste wird ein Konfidenzmaß Kₑ von 0,3 ermittelt. Für die dritte Bediengeste wird ein Konfidenzmaß Kₑ von 0,1 ermittelt. Die ausgeführte Geste entspricht daher mit der höchsten Sicherheit der horizontalen Wischgeste.

Es wird daher nur für die horizontale Wischgeste der visuelle Hinweis 11, wie er in Figur 3b gezeigt ist, angezeigt.

Alternativ kann auch für beide Wischgesten, die in dem Konfidenzintervall von 0,2 bis 0,6 liegen, ein visueller Hinweis ausgegeben werden. Es wird dann zusätzlich ein visueller Hinweis für die vertikale Wischgeste auf der Anzeigefläche 19 angezeigt.

Alle aufgeführten Ausführungsbeispiele, die mit dem erfindungsgemäßen Ausführungsbeispiel der erfindungsgemäßen Vorrichtung 20 erläutert sind, können auch mit der Vorrichtung 1 ausgeführt werden. So kann auch der Erfassungsraum 6, der durch die berührungsempfindliche Oberfläche 6 in dem ersten Ausführungsbeispiel gebildet wird, in mehrere Sektoren aufgeteilt werden, wobei zumindest ein Sektor den Optimalbereich zur Gestenerfassung und -erkennung bildet. Es wird dann ebenso die Anzahl der Sektoren ermittelt, die der Nutzer beim Ausführen der Geste durchquert und welche nicht den Optimalbereich bilden. Zudem kann auch um die festgelegte Trajektorie 13 ein Toleranzbereich in dem Erfassungsraum 6 gebildet sein und der Prozentsatz ermittelt werden, zu welchem die Geste innerhalb des Erfassungsraums 6 ausgeführt wird.

Zudem kann auch das erste Ausführungsbeispiel des erfindungsgemäßen Verfahrens mit der Vorrichtung 20 ausgeführt werden. Es wird dann eine Abweichung bzw. eine Winkel α einer in der Luft ausgeführten Geste von der festgelegten Trajektorie 13 innerhalb des Erfassungsraums 18 ermittelt werden und daraus ein Konfidenzmaß ermittelt.

Zudem können alle Ausführungsbeispiele des erfindungsgemäßen Verfahrens miteinander kombiniert werden. Das Konfidenzmaß wird dann anhand einer Vielzahl von ermittelten Parametern ermittelt. Dabei kann das Konfidenzmaß aus einer Kombination der Geschwindigkeit, des Ausführungsortes der Geste, der erfassten Trajektorie und/oder der erfassten Abweichung von der festgelegten Trajektorie ermittelt werden.

### Bezugszeichenliste

- 1: Vorrichtung
- 2: Nutzerschnittstelle; Anzeigevorrichtung
- 3: Erfassungseinheit; berührungsempfindliche Oberfläche
- 4: Steuereinheit
- 5: Ermittlungseinheit
- 6: Erfassungsraum
- 7: graphisches Objekt
- 8.1, 8.2: graphische Symbole
- 9: Fahrzeug
- 10: Lautsprecher; Rückmeldeeinheit
- 11: visueller Hinweis
- 12: Bedienelement; Hand
- 13: festgelegte Trajektorie
- 14: Toleranzbereich
- 15: erfasste Trajektorie
- 16: Berührungspunkt
- 17: Erfassungseinheit; Kamera
- 18: Erfassungsraum
- 18.1 - 18.7: Sektoren des Erfassungsraums 18
- 19: Anzeigefläche; Rückmeldeeinheit
- 20: Vorrichtung
- K: Konfidenzmaß
- Kₒ: festgelegter Wert des Konfidenzmaßes
- Kᵤ: weiterer festgelegter Wert des Konfidenzmaßes
- Kₑ: ermittelter Wert des Konfidenzmaßes
- S1 - S8: Verfahrensschritte
- S11 - S15: Verfahrensschritte

## Patentansprüche

1. Verfahren zum Bedienen einer Nutzerschnittstelle (2) in einem Fahrzeug (9), wobei über die Nutzerschnittstelle (2) zumindest eine Funktion mittels einer Bediengeste bedienbar ist, bei dem
eine mittels eines Bedienelements (12) ausgeführte Geste in einem Erfassungsraum (6, 18), welcher ein Volumen vor einer Anzeigefläche (19) ist, welcher der Nutzerschnittstelle (2) zugeordnet ist, erfasst wird,
ein Konfidenzmaß (Kₑ) ermittelt wird, welches die Sicherheit dafür angibt, dass die Geste der Bediengeste entspricht,
wenn ermittelt wird, dass das ermittelte Konfidenzmaß (Kₑ) unterhalb eines festgelegten Konfidenzwertes (Kₒ) liegt, die Geste nicht als die Bediengeste erkannt wird, und
eine Systemrückmeldung generiert wird, wobei die Systemrückmeldung einen Hinweis (11) auf eine korrekte Ausführung der Bediengeste umfasst,
**dadurch gekennzeichnet, dass**
der Erfassungsraum (18) in mehrere Sektoren (18.1 - 18.7) unterteilt wird, wobei zumindest ein erster Sektor (18.1) einen Optimalbereich zur Gestenerfassung darstellt in dem eine korrekt ausgeführte Geste zweifelsfrei erkannt wird, und zumindest ein zweiter Sektor (18.2 - 18.7) einen nicht optimalen Bereich zur Gestenerfassung darstellt in dem eine Geste zwar erfasst, aber nicht zweifelsfrei erkannt wird, und erfasst wird, ob die Geste im Optimalbereich des Erfassungsraums (18) ausgeführt wird, und
das Konfidenzmaß (Kₑ) unterhalb des festgelegten Konfidenzwertes (Kₒ) liegt, wenn ermittelt wird, dass die Geste zumindest teilweise außerhalb des Optimalbereichs ausgeführt wurde.

2. Verfahren nach Anspruch 1,
**dadurch gekennzeichnet, dass**
die Geschwindigkeit, mit welcher die Geste ausgeführt wird, erfasst wird und
das Konfidenzmaß (Kₑ) in Abhängigkeit von der ermittelten Geschwindigkeit ermittelt wird, wobei das Konfidenzmaß (Kₑ) unterhalb des festgelegten Konfidenzwertes (Kₒ) liegt, wenn die ermittelte Geschwindigkeit außerhalb eines festgelegten Geschwindigkeitsintervalls liegt.

3. Verfahren nach Anspruch 1 oder 2,
**dadurch gekennzeichnet, dass**
eine Trajektorie (15) des Bedienelements (12) in dem Erfassungsraum (6, 18) erfasst wird, welche der ausgeführten Geste zugeordnet wird,
eine Abweichung (α) der erfassten Trajektorie (15) von einer festgelegten Trajektorie (13), welche der Bediengeste zugeordnet ist, ermittelt wird,
das Konfidenzmaß (Kₑ) in Abhängigkeit von der Abweichung (a) der erfassten Trajektorie (15) von der festgelegten Trajektorie (13) ermittelt wird, wobei das Konfidenzmaß (Kₑ) unterhalb des festgelegten Konfidenzwertes (Kₒ) liegt, wenn die Abweichung (α) der erfassten Trajektorie (15) von der festgelegten Trajektorie (13) eine festgelegte Abweichung (α) überschreitet.

4. Verfahren nach Anspruch 3,
**dadurch gekennzeichnet, dass**
ein Toleranzbereich (14) um die festgelegte Trajektorie (13) gebildet ist,
ein Prozentsatz ermittelt wird, zu welchem die Geste innerhalb des Toleranzbereiches (14) ausgeführt wurde, und
das Konfidenzmaß (Kₑ) in Abhängigkeit von dem Prozentsatz ermittelt wird, wobei das Konfidenzmaß (Kₑ) unterhalb des festgelegten Konfidenzwertes (Kₒ) liegt, wenn der ermittelte Prozentsatz unterhalb eines festgelegten Prozentsatzes liegt.

5. Verfahren nach einem der Ansprüche 1 bis 4,
**dadurch gekennzeichnet, dass**
erfasst wird, welche Sektoren (18.1 - 18.7) bei der Ausführung der Geste durchquert werden,
von den durchquerten Sektoren (18.1 - 18.7) die Anzahl der Sektoren (18.2 - 18.7) ermittelt wird, welche nicht den Optimalbereich bilden, und
das Konfidenzmaß (Kₑ) in Abhängigkeit von der Anzahl der Sektoren (18.2 - 18.7) ermittelt wird, wobei das Konfidenzmaß (Kₑ) unterhalb des festgelegten Konfidenzwertes (Kₒ) liegt, wenn die Anzahl der Sektoren (18.2 - 18.7) eine festgelegte Anzahl überschreitet.

6. Verfahren nach einem der Ansprüche 1 bis 5,
**dadurch gekennzeichnet, dass**
die Systemrückmeldung einen visuellen Hinweis (11) zur korrekten Ausführung der Bediengeste umfasst, bei dem die korrekte Ausführung der Bediengeste als graphisches Objekt und/oder in einer Bildreihenfolge angezeigt wird.

7. Verfahren nach einem der Ansprüche 1 bis 6,
**dadurch gekennzeichnet, dass,**
die Systemrückmeldung einen akustischen Hinweis umfasst, bei dem eine Tonfrequenz, eine Tonlautstärke und/oder eine Länge eines Intervalls zwischen zwei aufeinanderfolgenden Tönen das Konfidenzmaß (Kₑ) wiedergibt.

8. Verfahren nach Anspruch 7,
**dadurch gekennzeichnet, dass**
erfasst wird, dass die Geste nicht in einem Optimalbereich (18.1) des Erfassungsraums (18) ausgeführt wird, und
ein Abstand des Bedienelements (12) zu dem Optimalbereich ermittelt wird, wobei die Tonfrequenz, die Tonlautstärke und/oder die Dauer zwischen wiederholten Tönen abhängig von dem ermittelten Abstand ist/sind.

9. Vorrichtung (1, 20) zum Bedienen einer Nutzerschnittstelle (2) in einem Fahrzeug (9), wobei über die Nutzerschnittstelle (2) zumindest eine Funktion mittels einer Bediengeste bedienbar ist, mit
einer Erfassungseinheit (5, 17), mittels welcher eine mittels eines Bedienelements (12) ausgeführte Geste in einem Erfassungsraum (6, 18), welcher ein Volumen vor einer Anzeigefläche (19) ist, welcher der Nutzerschnittstelle (2) zugeordnet ist, erfassbar ist,
einer Ermittlungseinheit (5), mittels welcher ein Konfidenzmaß (Kₑ) ermittelt wird, welches die Sicherheit dafür angibt, dass die Geste der Bediengeste entspricht, wobei die Geste nicht als Bediengeste erkannt wird, wenn ermittelt wird, dass das ermittelte Konfidenzmaß (Kₑ) unterhalb eines festgelegten Konfidenzwertes (Kₒ) liegt,
einer Steuereinheit (4), und
einer Rückmeldeeinheit (10, 19), welche mittels der Steuereinheit (4) derart ansteuerbar ist, dass eine Systemrückmeldung generierbar ist, wobei die Systemrückmeldung einen Hinweis auf die korrekte Ausführung der Bediengeste umfasst, wenn ermittelt wird, dass das ermittelte Konfidenzmaß (Kₑ) unterhalb eines festgelegten Konfidenzwertes (Kₒ) liegt.
**dadurch gekennzeichnet, dass**
der Erfassungsraum (18) in mehrere Sektoren (18.1 - 18.7) unterteilt ist, wobei zumindest ein erster Sektor (18.1) einen Optimalbereich zur Gestenerfassung darstellt in dem eine korrekt ausgeführte Geste zweifelsfrei erkannt wird, und zumindest ein zweiter Sektor (18.2 - 18.7) einen nicht optimalen Bereich zur Gestenerfassung darstellt in dem eine Geste zwar erfasst, aber nicht zweifelsfrei erkannt wird, und erfasst wird ob die Geste im Optimalbereich des Erfassungsraums (18) ausgeführt wird, und
das Konfidenzmaß (Kₑ) unterhalb des festgelegten Konfidenzwertes (Kₒ) liegt, wenn ermittelt wird, dass die Geste zumindest teilweise außerhalb des Optimalbereichs ausgeführt wurde.

## Claims

1. Method for operating a user interface (2) in a vehicle (9), wherein the user interface (2) can be used to operate at least one function by means of an operating gesture, in which
a gesture performed by means of an operating element (12) is captured in a capture area (6, 18) which is a volume in front of a display surface (19) assigned to the user interface (2),
a confidence measure (Kₑ) which indicates the certainty that the gesture corresponds to the operating gesture is determined,
if it is determined that the determined confidence measure (Kₑ) is below a stipulated confidence value (Kₒ), the gesture is not recognized as the operating gesture, and
system feedback is generated, wherein the system feedback comprises an indication (11) of correct performance of the operating gesture, **characterized in that**
the capture area (18) is subdivided into a plurality of sectors (18.1-18.7), wherein at least one first sector (18.1) constitutes an optimum region for capturing gestures in which a correctly performed gesture is unequivocally recognized, and at least one second sector (18.2-18.7) constitutes a non-optimum region for capturing gestures in which, although a gesture is captured, it is not unequivocally recognized, and
it is captured whether the gesture is performed in the optimum region of the capture area (18), and
the confidence measure (Kₑ) is below the stipulated confidence value (Kₒ) if it is determined that the gesture was at least partially performed outside the optimum region.

2. Method according to Claim 1,
**characterized in that**
the speed at which the gesture is performed is captured, and
the confidence measure (Kₑ) is determined on the basis of the determined speed, wherein the confidence measure (Kₑ) is below the stipulated confidence value (Kₒ) if the determined speed is outside a stipulated speed range.

3. Method according to Claim 1 or 2,
**characterized in that**
a trajectory (15) of the operating element (12) is captured in the capture area (6, 18), which trajectory is assigned to the gesture which has been performed,
a deviation (α) of the captured trajectory (15) from a stipulated trajectory (13) assigned to the operating gesture is determined,
the confidence measure (Kₑ) is determined on the basis of the deviation (α) of the captured trajectory (15) from the stipulated trajectory (13), wherein the confidence measure (Kₑ) is below the stipulated confidence value (Kₒ) if the deviation (α) of the captured trajectory (15) from the stipulated trajectory (13) exceeds a stipulated deviation (α).

4. Method according to Claim 3,
**characterized in that**
a tolerance range (14) is formed around the stipulated trajectory (13),
a percentage for which the gesture was performed within the tolerance range (14) is determined, and the confidence measure (Kₑ) is determined on the basis of the percentage, wherein the confidence measure (Kₑ) is below the stipulated confidence value (Kₒ) if the determined percentage is below a stipulated percentage.

5. Method according to one of Claims 1 to 4,
**characterized in that**
the sectors (18.1-18.7) which are crossed when performing the gesture are captured,
of the sectors (18.1-18.7) which are crossed, the number of sectors (18.2-18.7) which do not form the optimum region is determined, and
the confidence measure (Kₑ) is determined on the basis of the number of sectors (18.2-18.7), wherein the confidence measure (Kₑ) is below the stipulated confidence value (Kₒ) if the number of sectors (18.2-18.7) exceeds a stipulated number.

6. Method according to one of Claims 1 to 5,
**characterized in that**
the system feedback comprises a visual indication (11) for correctly performing the operating gesture, in which the correct performance of the operating gesture is displayed as a graphical object and/or in an image sequence.

7. Method according to one of Claims 1 to 6,
**characterized in that**
the system feedback comprises an acoustic indication in which a sound frequency, a sound volume and/or a length of an interval between two successive sounds represent (s) the confidence measure (Kₑ).

8. Method according to Claim 7,
**characterized in that**
it is captured that the gesture is not performed in an optimum region (18.1) of the capture area (18), and
a distance between the operating element (12) and the optimum region is determined, wherein the sound frequency, the sound volume and/or the duration between repeated sounds is/are dependent on the determined distance.

9. Apparatus (1, 20) for operating a user interface (2) in a vehicle (9), wherein the user interface (2) can be used to operate at least one function by means of an operating gesture, having
a capture unit (5, 17) which can be used to capture a gesture performed by means of an operating element (12) in a capture area (6, 18) which is a volume in front of a display surface (19) assigned to the user interface (2),
a determination unit (5) which is used to determine a confidence measure (Kₑ) which indicates the certainty that the gesture corresponds to the operating gesture, wherein the gesture is not recognized as an operating gesture if it is determined that the determined confidence measure (Kₑ) is below a stipulated confidence value (Kₒ),
a control unit (4), and
a feedback unit (10, 19) which can be controlled by means of the control unit (4) in such a manner that system feedback can be generated, wherein the system feedback comprises an indication of the correct performance of the operating gesture if it is determined that the determined confidence measure (Kₑ) is below a stipulated confidence value (Kₒ) ,
**characterized in that**
the capture area (18) is subdivided into a plurality of sectors (18.1-18.7), wherein at least one first sector (18.1) constitutes an optimum region for capturing gestures in which a correctly performed gesture is unequivocally recognized, and at least one second sector (18.2-18.7) constitutes a non-optimum region for capturing gestures in which, although a gesture is captured, it is not unequivocally recognized,
and it is captured whether the gesture is performed in the optimum region of the capture area (18), and
the confidence measure (Kₑ) is below the stipulated confidence value (Kₒ) if it is determined that the gesture was at least partially performed outside the optimum region.

## Revendications

1. Procédé pour commander une interface utilisateur (2) dans un véhicule (9), au moins une fonction pouvant être commandée par le biais de l'interface utilisateur (2) au moyen d'un geste de commande, procédé selon lequel
un geste exécuté au moyen d'un élément de commande (12) est détecté dans un espace de détection (6, 18) qui est un volume devant une surface d'affichage (19), laquelle est associée à l'interface utilisateur (2),
un indice de confiance (Kₑ) est déterminé, lequel indique la certitude avec laquelle le geste correspond au geste de commande,
lorsqu'il est déterminé que l'indice de confiance (Kₑ) déterminé est inférieur à une valeur de confiance (Kₒ) fixée, le geste n'est pas reconnu comme étant le geste de commande, et
un message de réponse du système est généré, le message de réponse du système comportant une indication (11) relative à une exécution correcte du geste de commande, **caractérisé en ce que**
l'espace de détection (18) est subdivisé en plusieurs secteurs (18.1 - 18.7), au moins un premier secteur (18.1) représentant une zone optimale pour la détection de geste, dans laquelle un geste exécuté correctement est reconnu avec certitude, et au moins un deuxième secteur (18.2 - 18.7) représentant une zone non optimale pour la détection de geste, dans laquelle un geste exécuté correctement est bien détecté, mais n'est pas reconnu avec certitude, et
une détection est effectuée en vue de déterminer si le geste est exécuté dans la zone optimale de l'espace de détection (18), et
l'indice de confiance (Kₑ) est inférieur à la valeur de confiance (Kₒ) fixée lorsqu'il est déterminé que le geste a été exécuté au moins partiellement en-dehors de la zone optimale.

2. Procédé selon la revendication 1, **caractérisé en ce que** la vitesse à laquelle le geste est exécuté est détectée et l'indice de confiance (Kₑ) est déterminé en fonction de la vitesse déterminée, l'indice de confiance (Kₑ) étant inférieur à la valeur de confiance (Kₒ) fixée lorsque la vitesse déterminée est en-dehors d'un intervalle de vitesses fixé.

3. Procédé selon la revendication 1 ou 2, **caractérisé en ce que**
une trajectoire (15) de l'élément de commande (12) dans l'espace de détection (6, 18) est détectée, laquelle est associée au geste exécuté,
un écart (α) de la trajectoire détectée (15) par rapport à une trajectoire fixée (13) qui est associée au geste exécuté est déterminé,
l'indice de confiance (Kₑ) est déterminé en fonction de l'écart (α) de la trajectoire détectée (15) par rapport à la trajectoire fixée (13), l'indice de confiance (Kₑ) étant inférieur à la valeur de confiance (Kₒ) fixée lorsque l'écart (α) de la trajectoire détectée (15) par rapport à la trajectoire fixée (13) est supérieur à un écart (α) fixé.

4. Procédé selon la revendication 3, **caractérisé en ce que**
une plage de tolérance (14) est formée autour de la trajectoire fixée (13),
un pourcentage auquel le geste a été exécuté à l'intérieur de la plage de tolérance (14) est déterminé et
l'indice de confiance (Kₑ) est déterminé en fonction du pourcentage, l'indice de confiance (Kₑ) étant inférieur à la valeur de confiance (Kₒ) fixée lorsque le pourcentage déterminé est inférieur à un pourcentage fixé.

5. Procédé selon l'une des revendications 1 à 4, **caractérisé en ce que**
les secteurs (18.1 - 18.7) qui sont croisés lors de l'exécution du geste sont détectés,
le nombre de secteurs (18.2 - 18.7) qui ne forment pas la zone optimale parmi les secteurs (18.1 - 18.7) croisés est déterminé, et
l'indice de confiance (Kₑ) est déterminé en fonction du nombre de secteurs (18.2 - 18.7), l'indice de confiance (Kₑ) étant inférieur à la valeur de confiance (Kₒ) fixée lorsque le nombre de secteurs (18.2 - 18.7) est supérieur à un nombre fixé.

6. Procédé selon l'une des revendications 1 à 5, **caractérisé en ce que** le message de réponse du système comprend une indication visuelle (11) relative à une exécution correcte du geste de commande avec laquelle l'exécution correcte du geste de commande est affichée sous la forme d'un objet graphique et/ou d'une séquence d'images.

7. Procédé selon l'une des revendications 1 à 6, **caractérisé en ce que** le message de réponse du système comprend une indication sonore, avec laquelle une audiofréquence, un volume sonore et/ou une longueur d'un intervalle entre deux signaux sonores successifs restituent l'indice de confiance (Kₑ).

8. Procédé selon la revendication 7, **caractérisé en ce que**
le fait que le geste n'est pas exécuté dans une zone optimale (18.1) de l'espace de détection (18) est détecté, et
un écart entre l'élément de commande (12) et la zone optimale est déterminé, l'audiofréquence, le volume sonore et/ou la durée entre deux signaux sonores répétés étant dépendant(s) de l'écart déterminé.

9. Arrangement (1, 20) pour commander une interface utilisateur (2) dans un véhicule (9), au moins une fonction pouvant être commandée par le biais de l'interface utilisateur (2) au moyen d'un geste de commande, comprenant
une unité de détection (5, 17) au moyen de laquelle un geste exécuté au moyen d'un élément de commande (12) peut être détecté dans un espace de détection (6, 18) qui est un volume devant une surface d'affichage (19), laquelle est associée à l'interface utilisateur (2), une unité de détermination (5) au moyen de laquelle est déterminé un indice de confiance (Kₑ), lequel donne la certitude que le geste correspond au geste de commande, le geste n'étant pas reconnu comme étant un geste de commande lorsqu'il est déterminé que l'indice de confiance (Kₑ) déterminé est inférieur à une valeur de confiance (Kₒ) fixée,
une unité de commande (4), et
une unité de réponse (10, 19) qui peut être commandée au moyen de l'unité de commande (4) de telle sorte qu'un message de réponse du système peut être généré, le message de réponse du système comportant une indication relative à une exécution correcte du geste de commande lorsqu'il est déterminé que l'indice de confiance (Kₑ) déterminé est inférieur à une valeur de confiance (Kₒ) fixée,
**caractérisé en ce que**
l'espace de détection (18) est subdivisé en plusieurs secteurs (18.1 - 18.7), au moins un premier secteur (18.1) représentant une zone optimale pour la détection de geste, dans laquelle un geste exécuté correctement est reconnu avec certitude, et au moins un deuxième secteur (18.2 - 18.7) représentant une zone non optimale pour la détection de geste, dans laquelle un geste est bien détecté, mais n'est pas reconnu avec certitude, et
une détection est effectuée en vue de déterminer si le geste est exécuté dans la zone optimale de l'espace de détection (18), et
l'indice de confiance (Kₑ) est inférieur à la valeur de confiance (Kₒ) fixée lorsqu'il est déterminé que le geste a été exécuté au moins partiellement en-dehors de la zone optimale.
